# EUROPEAN PATENT SPECIFICATION

(11) **EP 3 712 040 B1**
(45) Date of publication and mention of the grant of the patent: **02.08.2023**
(21) Application number: 19164485.5
(22) Date of filing: 21.03.2019
(51) Int. Cl.: B62D 21/10, B62D 21/20, B62D 25/20, B62D 33/023, B62D 63/06

(54) **TRAILER PLATTFORM**
LKW ANHÄNGER PLATTFORM
VÉHICULE DE REMORQUE

(43) Date of publication of application: 23.09.2020
(73) Proprietor: HONEYtech Sp. z o.o., 52-213 Wroclaw (PL)
(72) Inventor: Koziolek, Sebastian, 98-200 Sieradz (PL); Mysior, Marek, 59-420 Bolkow (PL); Pryda, Bartosza, 58-400 Kamienna Gora (PL)
(74) Representative: Pawlowska, Justyna

(56) References cited:
- EP-A1- 0 342 301
- DE-A1- 3 008 378
- DE-A1- 3 809 185
- JP-A- 2000 142 488
- US-A1- 2005 028 471

## Description

The invention consists in the structure of a platform of a vehicle's trailer, constituting the basic elements of a trailer for payload transport - a floor. The invention also consists in a trailer with a platform made according to the invention and equipped with additional mounting elements enabling the platform to be connected to other trailer elements such as sideboards and/or accessories.

Platforms for transporting cargo by land vehicle like cars are widely known and are usually built based on a load-carrying frame, most often welded, to which plywood, steel sheet or aluminum plate is permanently attached in order to ensure adequate loading space.

There are trailers for transporting cargo by land containing a platform - constituting the trailer floor, a drawbar assembly, a sideboard and possibly a lamp panel. The platform in such trailers is made of plywood, steel sheet or aluminum sheet, but these solutions require the use of additional elements that increase the transverse stiffness of the platform in the form of crossbars arranged across the platform. It is dictated by the necessity of ensuring sufficiently high stiffness of the trailer floor while minimizing the weight of the trailer.

The disadvantage of existing trailers is their high net weight, which is caused by low specific stiffness (stiffness divided by density) of their floor panels - platforms. The existing platforms are made of plywood or steel sheet. The use of additional significant floor reinforcement bars increases the number of components necessary to be delivered and stored on the production line. In addition, currently manufactured trailers are based mainly on sheet metal forming technology (usually bending), which significantly limits the possibility of trailer customization while maintaining low production costs. Such a trailer is known from US 2005/028471.

In line with the above, the aim of the invention is to provide a trailer with reduced weight and to simplify the production process. This was achieved by developing a particular structure of the platform that creates a floor panel. The platform is divided into three parts - core and outer layers, where the core constitutes at least 50% of the platform thickness created by the outer layers and the core. Due to the construction of the platform according to the invention, the trailer floor is a stable construction.

The invention relates to a three-layer structure of the trailer platform in several main embodiments of outer layers formation : 1) the outer layers have the form of an open C-shaped profile, where one layer covers the other thus enclosing the platform core between the layers; 2) the outer layers have the form of a panel covering the core from the bottom and top, and the core is laterally enclosed by angle panels, or in another preferred embodiment by C-shaped profile forming the platform ferrule. The second main embodiment can be made with the outer layers having the same length and width as the core, or both outer layers having the same length, and at least one outer layer being narrower than the core. In the last case, an angle panel or a ferrule is an extension of the outer layer. If the outer layer is narrower than the core, the minimum width of the outer layer is 90% of the core width . In the case of outer layers of equal length and width as the core, angle panels or ferrules cover the entire side of the core and partly the top surface of at least one outer layer, wherein the side length of one angle plate/ferrule arm covering the top layer cannot exceed 5% of the total surface layer width and 5% of the core width, respectively. If a top layer with a shorter width is used in relation to the width of the core, angle panels or ferrules constitute an extension of the outer layer and additionally cover the second outer layer. The side length of one angle panel/ferrule covering the top layer cannot exceed 5% of the entire width core.

The platform of a land cargo vehicle trailer, which forms a floor of the trailer, and has the form of a cuboid, is characterized according to the invention in the first embodiment of the platform that it is formed by the upper and lower outer layers having the form of an open profile, where each outer layer comprises a base laterally surrounded on four sides with arms between which a one-sided open space is formed so that the outer layers are mutually overlapping. In an enclosed from the top, bottom and sides space formed between the upper and lower outer layers connected to one another, a platform core is located, which is connected to the base surface and the arms of the outer layer adjacent to the core. The upper outer layer and the lower outer layer are made of metal, metal alloys or composite materials, and the core has the form of a cellular material, preferably shaped as a honeycomb, whereas the core thickness constitutes at least 50% of the platform thickness formed by the core and the outer layers. Preferred features of this embodiment of the platform are described in the claims.

The platform of a land cargo transport trailer, according to further embodiment of the invention, has the upper outer layer in the form of a panel covering the top surface of the core, and the lower outer layer in the form of a panel covering the bottom surface of the core. The core is covered laterally by angle panels and/or ferrule made of steel, preferably galvanized steel, aluminum, preferably anodized aluminum, wherein the side length of the angle panel or ferrule horizontal arm from the side of the top layer does not exceed 5% of the core width. Preferred features of this embodiment of the platform are described in the claims.

The invention also relates to a trailer comprised of a platform according to the invention described in the claims.

A common advantage of each embodiment of the platform is a multi-layered, sandwich structure of the trailer floor, which significantly reduces the mass of the platform while ensuring its high rigidity. In order to provide additional strength of the platform, upper and lower outer layers are connected to each other by bent outer surface arms (example 1), platform angle panels (example 2) or platform ferrule (example 3), allowing optimal use of the trailer structure for transporting loads by land.

In each embodiment of the platform, the core constitutes at least 50% of the thickness of the 3-layer platform, while the outer layers are made of steel, preferably galvanized steel, aluminum, preferably anodized aluminum, plywood or a laminate composite and the core is made of light material, i.e. of low density, e.g. a plastic, such as polypropylene or light metals such as aluminum, with a cellular structure e.g. honeycomb, angle panels and ferrules are made of steel, preferably galvanized steel, aluminum, preferably anodized aluminum.

In each of the platform embodiments , mounting elements are connected to the platform, which enable the separable or inseparable connection of the platform with sideboards and/or accessories of the trailer. Experimentally measured mass of trailers made according to this invention shows reduction in trailer weight by up to 20% compared to currently known solutions due to the platform having a 3-layer structure in a given shape and configuration according of the invention, used as a trailer floor. This construction provides that the platform has higher strength and specific stiffness as compared to the currently used solutions, which reduce its weight while maintaining the required mechanical properties of the trailer itself. Additionally, the use of a high-strength platform with a multi-layered structure makes it possible to eliminate crossbars from the platform structure, which allows to limit the number of components included in one trailer model and increases the standardization of trailer production. A trailer containing the platform according to the invention does not utilize components made by complicated manufacturing technologies, such as multiplane bending, which makes it possible to manufacture structural elements of the trailer such as sideboards, longitudinal members, sideboards fastening elements or lamp panel in the form of long, simple in cross-section profiles and cutting them to the length needed to assemble a specific trailer model. This approach to the design and manufacturing of trailers significantly reduces the lead time of the trailer construction. The implementation of the trailer on the basis of the platform according to the invention ensures low weight of the trailer structure by increasing the stiffness of the trailer floor compared to currently known solutions. The platform is comprised of a multi-layered structure containing a light, cheap and low-strength core, which task is to increase the stiffness of the panel by separating the outer layers made of stiff materials from the neutral axis of bending, providing up to seven times higher stiffness of the floor as compared to a single layer as thick as both outer layers combined, excluding thickness of the core. In addition, due to the use of a honeycomb core, the platform has much higher stiffness in the direction perpendicular to the length of the trailer, which makes it possible to eliminate the crossbar in the trailer frame that strengthens the floor of the trailer, which is commonly used in trailers equipped with plywood floor . Thus, it is possible to limit the amount of components necessary to build the trailer and allows for increasing the individualization of the product in terms of choosing the width and length of the trailer in accordance with the customer's expectations.

In currently known solutions, in the case of the use of a detachable sideboards, the sideboards are attached to the load-bearing structure of the trailer, i.e. the support frame. In the present invention, the corner of the trailer platform has been shaped in such a way that the attachment points of detachable sideboards are directly connected to the load-bearing structure of the trailer, i.e. the platform. This solution provides additional trailer stiffness , which is the result of using the sideboards.

Due to constructing the platform according to the invention, it is possible to use a combination of elements in the lamp panel and assemble it before assembling the lamp panel to the trailer, which is enabled by the modular construction of the entire lamp panel. Thanks to this, the lamp panel can be assembled on a separate stand and mounted to the platform as one module, shortening the production time of the trailer and simplifying the technological process. An additional advantage of the lamp panel according to the invention is that the elements used to build the lamp panel can be made of semi-finished products in the form of bent, simple in cross section profiles that can be cut to the desired length just before drilling the assembly holes, according to the customer's individual order, thus shortening the production process of custom element dimensions . The trailer construction makes it possible to adopt technology of cutting of semi-finished part to the desired length just prior the final assembly stage. Semi-finished components from which the trailer construction elements are made, such as the lamp mounting profile, cover angles, side member and other can be made as one long profile and cut to any size, which reduces manufacturing waste and allows for a significant reduction of the machine park as there is no need to apply complex plastic forming techniques like cutting or stamping, or other complicated sheet metal forming operations.

The application of detachable, bent sideboards in trailers is a known solution, however, the use of the method of changing the sides according to the invention makes it much easier to replace the sides by one person. The trailer according to the invention ensures easy assembly and disassembly of the sideboards. In the previously known solutions of detachable sideboards, it was necessary to utilize work of two people in order to dismantle the sideboard, one on the back and the other on the front of the trailer, to place the side posts in the mounting holes. In the present invention, the rear post is longer than the front post, which allows the rear post to be placed first in the rear mounting profile and only after it is positioned relative to the platform, for placing the front post in the front mounting profile. Thanks to this, one person is able to disassemble and install side boards by oneself. Another important novelty of the developed solution is the possibility of using sideboards with the structure of a multi-layered sandwich panel, i.e. the upper outer layer of the sideboard, the lower outer layer of the sideboard and the sideboard core, similarly to the platform, which allows for a significant increase in the stiffness of the sides and eliminates the need for reinforcing struts placed across the trailer to limit the deformation of the sideboards in the direction transverse to the direction of travel.

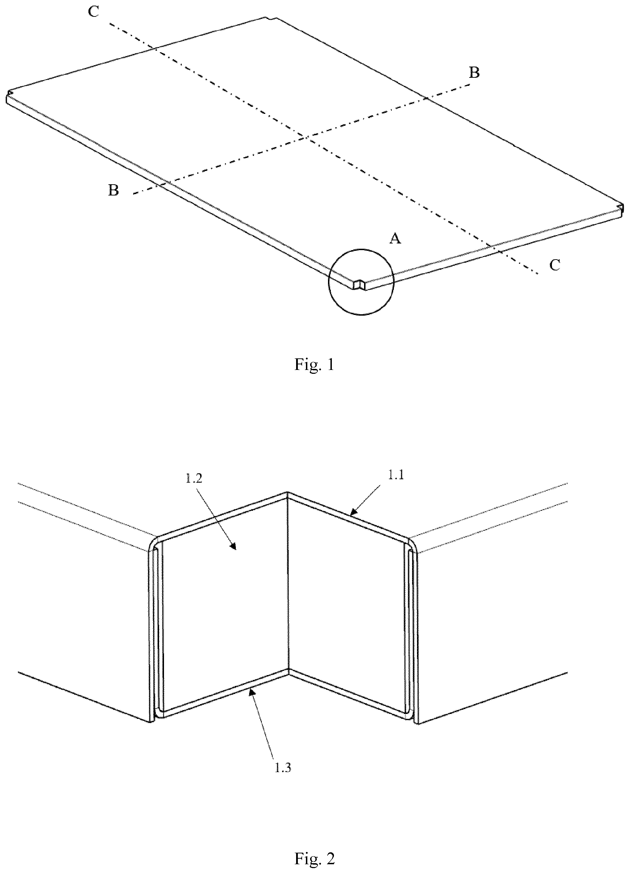

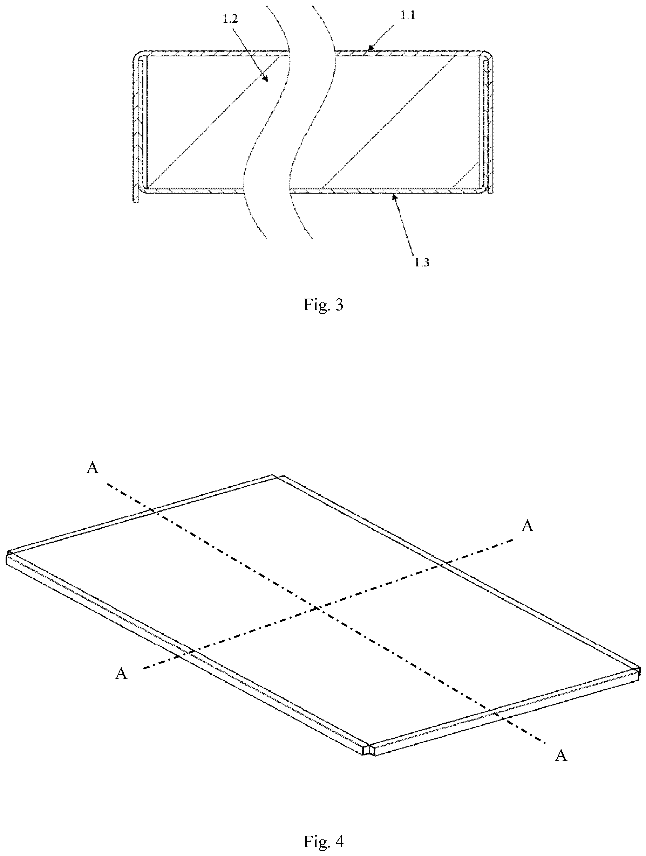

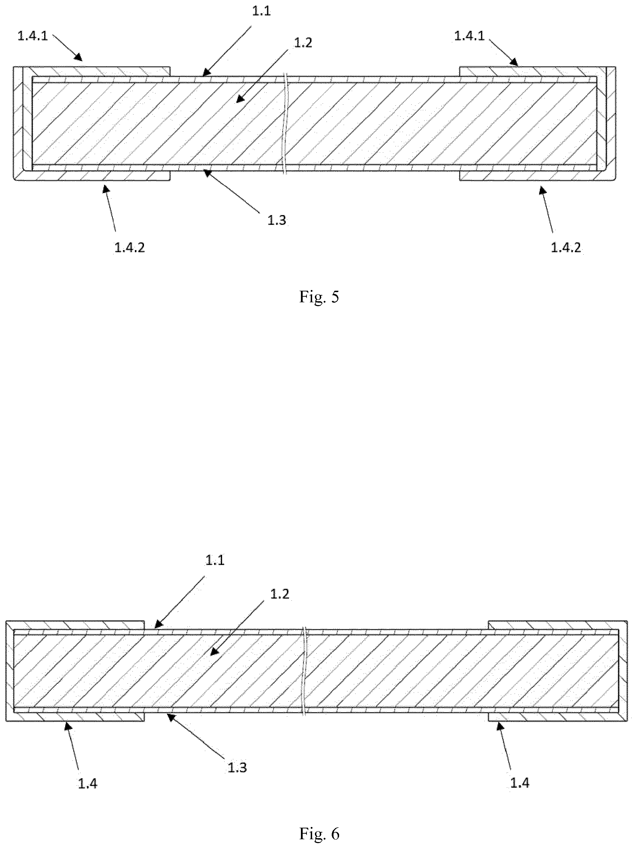

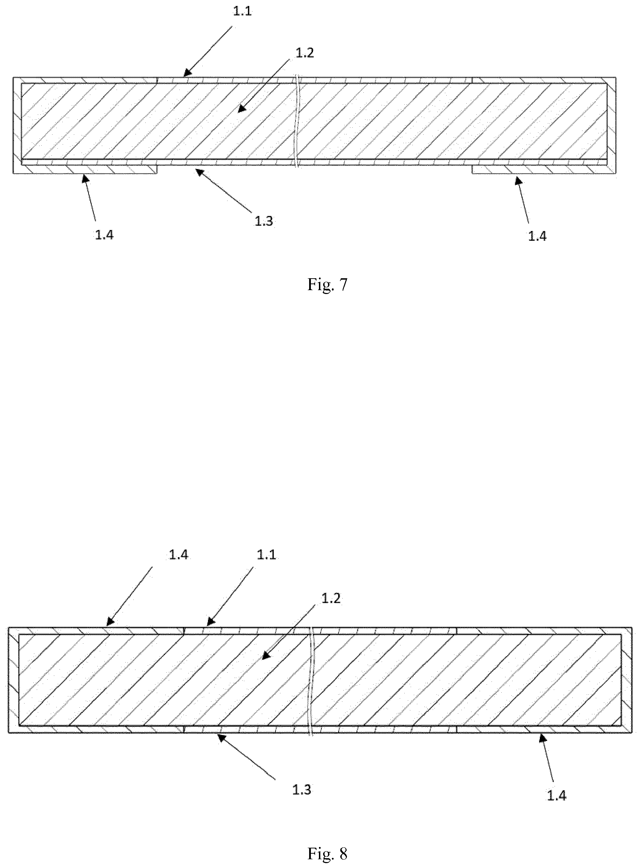

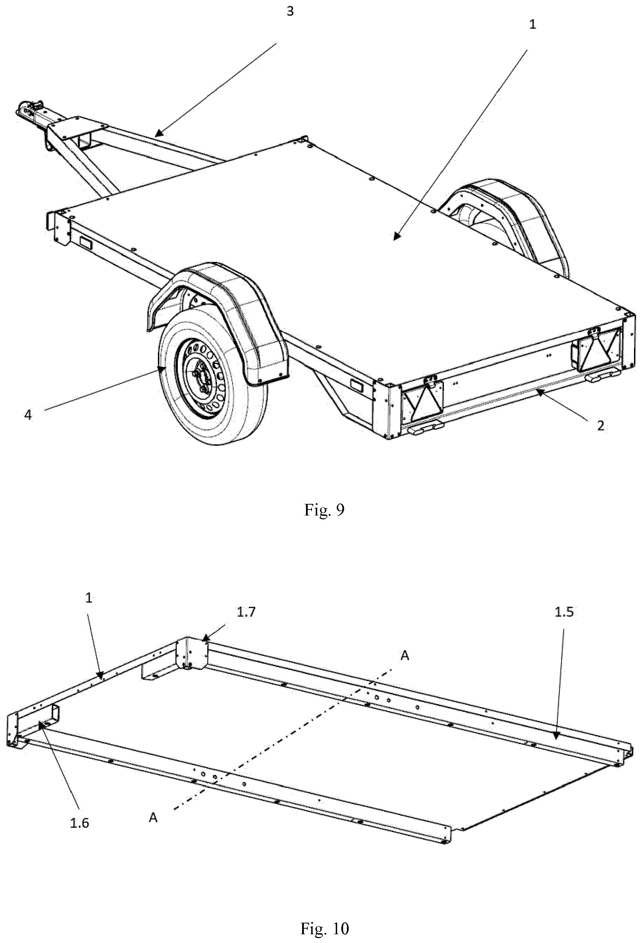

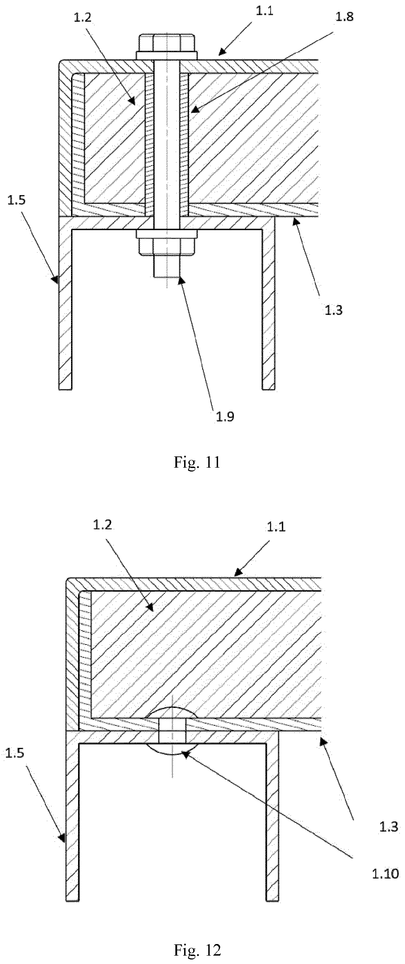

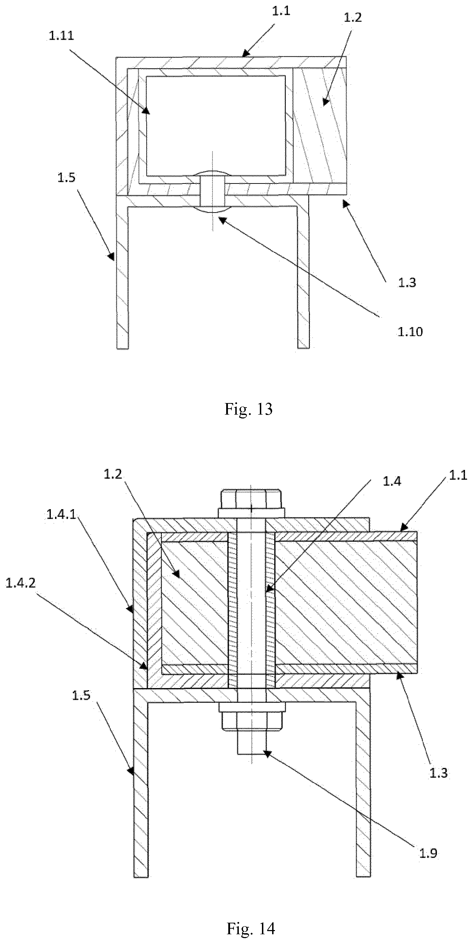

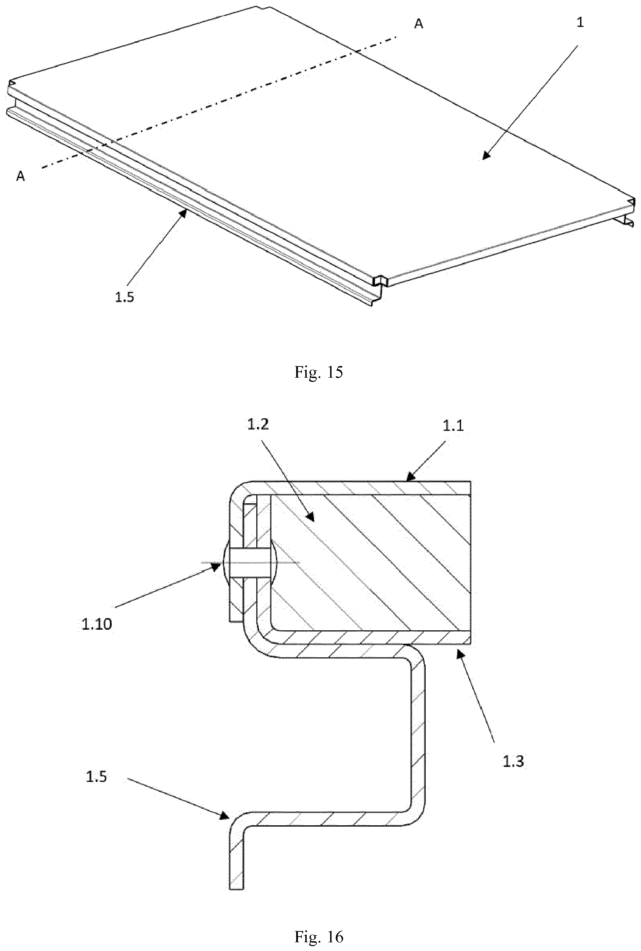

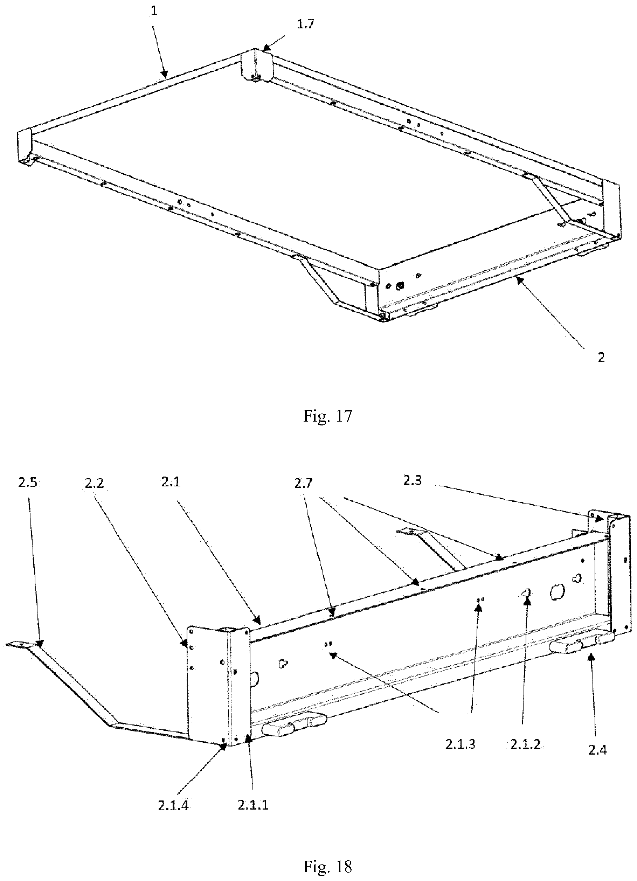

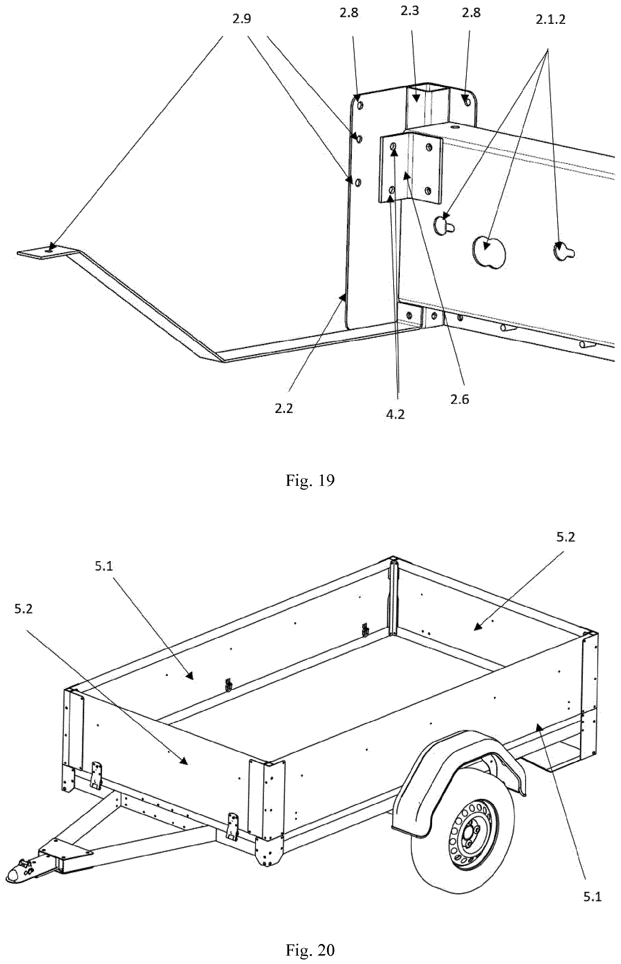

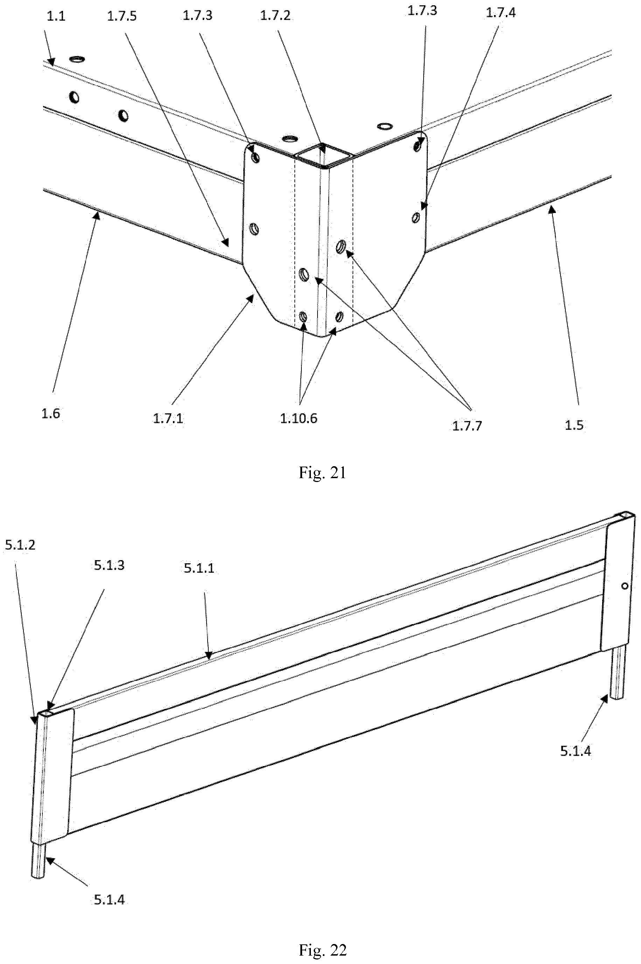

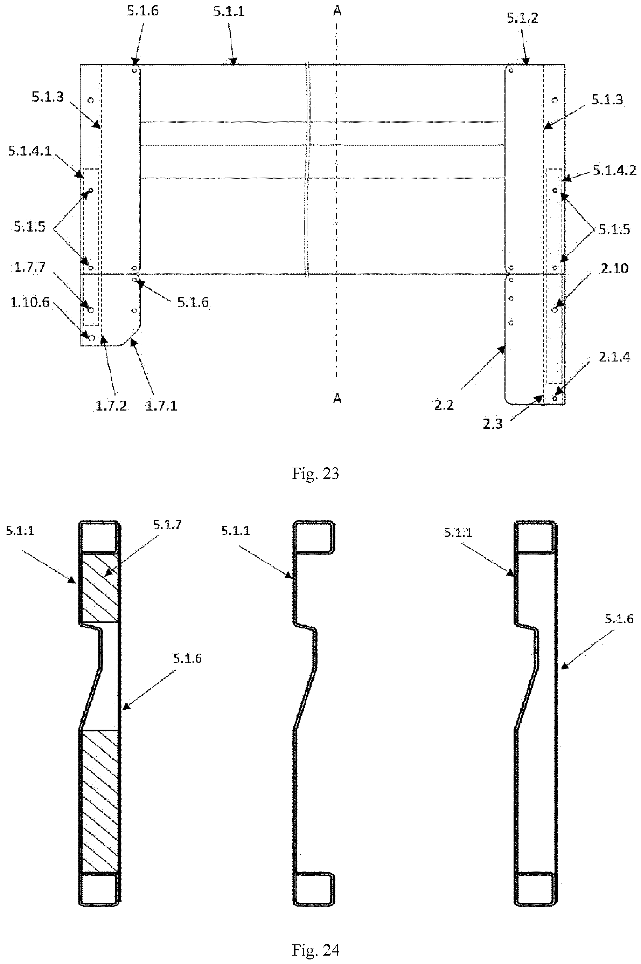

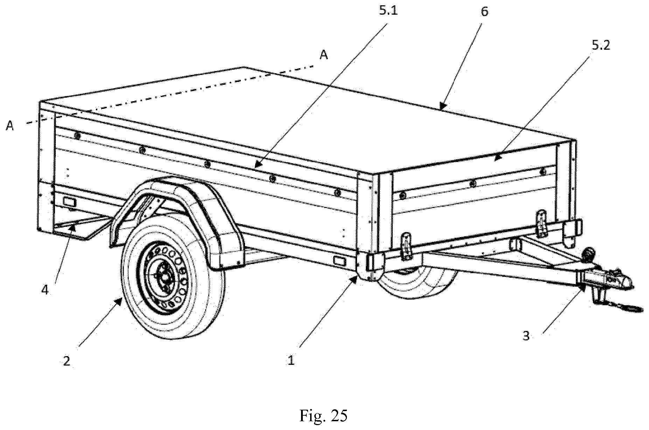

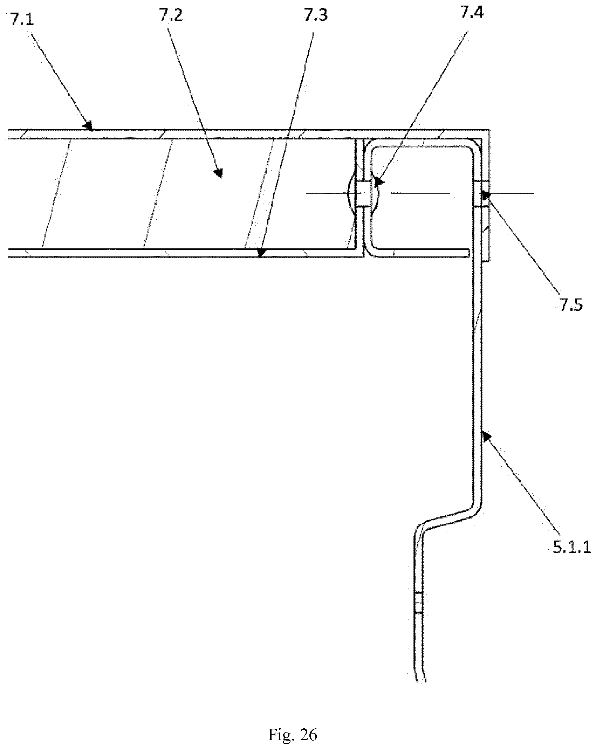

The invention is described in greater detail in the drawing, in which Fig. 1 shows the platform according to example 1 in an axonometric view, Fig. 2 is a close-up of Fig. 1 showing cut corners of platform 1, Fig. 3 shows a cross-section of platforms B-B and C-C as defined in Fig. 2 in example 1, Fig. 4 shows the platform as in examples 2 and 3 in an axonometric view, Fig. 5 is a cross-section view A-A of the platform as defined in Fig. 4 in example 2, Fig. 6 shows the cross-section A-A of the platform as defined in Fig. 4 in example 3, variant 1, Fig. 7 shows a cross-section A-A of the platform as defined in Fig. 4 in example 3, variant 2, Fig. 8 shows a cross-section A-A of the platform as defined in Fig. 4 in example 3, variant 3, Fig. 9 shows a trailer built from a platform, Fig. 10 shows general view of a trailer platform, Fig. 11 shows a cross-section A-A of the trailer as defined in Fig. 10 showing detachable connection of the platform to the sideboard, the platform according to example 1, Fig. 12 shows detachable connection of the platform to the sideboard, the platform according to example 2, Fig. 13 shows a cross-section A-A of the trailer as defined in Fig. 10 of the inseparable connection between the platform and the side member, the platform according to example 1, variant 1, Fig. 14 shows a cross-section A-A of the trailer as defined on fig. 10 showing rigid connection of the platform with the side member, platform according to example 1, variant 2, Fig. 15 shows a general view of the trailer platform according to example 1 connected with a side member, Fig. 16 shows a cross-section A-A of a trailer having inseparable connection between the platform and the side member, the platform according to example 1, Fig. 17 shows a general view of the trailer platform equipped with reinforcing and attachment elements equipped with a lamp panel, Fig. 18 shows an axonometric view of the lamp panel, Fig. 19 shows an axonometric view of the lamp panel with the attachment points to the platform and the side profile shown, Fig. 20 shows the trailer as in example 6. Fig. 21 shows a view of the front mounting angle attached the platform, Fig. 22 shows an axonometric view of the sideboard of the trailer, Fig. 23 shows a side view of the sideboard of the trailer with the connection of the sideboard to the platform and the lamp panel, Fig. 24 shows a cross-section A-A as defined in Fig. 23 of the sideboard in three variants, Fig. 25 shows an axonometric view of a cargo trailer according to example 7, Fig. 26 shows a cross-section A-A as defined in Fig. 25 of connection of a rigid roof to the sideboards according to example 7.

### Example 1. The platform according to the first embodiment

As shown in Fig. 1, platform 1 has a generally flat surface with no protruding edges, which facilitates the transport of bulk materials and allows free displacement of loads on the load surface.

As shown in Fig. 2 and Fig. 3, platform 1 comprises such elements as top outer layer 1.1, core 1.2 and lower outer layer 1.3. A characteristic feature of the present invention is the formation of outer layers in the form of open profiles with rounded edges, so that one layer forms a cover for the other layer, and each top and bottom layer has a rectangular base surrounded on four sides by the side walls, thus forming an open space between the arms, which is covered with a second layer. After covering lower outer layer 1.3 by top outer layer 1.1. space is formed in which core 1.2 of platform 1 is located between outer layers 1. Outer layers after joining together, e.g. gluing or riveting, form smooth surfaces without visible edges due to the rounded edges of top outer layer 1.1. top outer layer 1.1 and lower outer layer 1.3 have the form of an open profile - a double channel cover, built from the top wall - the base, with two longer side walls - arms, two shorter side walls forming shorter side walls - arms. The inclination of the side walls in relation to the base is 90 degrees. Top outer layer 1.1. is applied to lower outer layer 1.3 by their mutual opposite position forming at least partially closed space. The open space formed by lower outer layer 1.3 is closed from above by top outer layer 1.1 so that the two outer layers together form the top and bottom surfaces of platform 1. Top outer layer 1.1 is accordingly wider than lower outer layer 1.3 to cover entirely and close at least from the base, the open space formed by bottom outer layer 1.3. and cover the side arms - side walls - of lower outer layer 1.3 through top outer layer 1.1 shoulders.

In an enclosed from the top and from the bottom space, formed between superposed top outer layer 1.1 and lower outer layer 1.3, core 1.2 is located thus filling the entire space formed between outer layers. core 1.3 of platform 1 is thus enclosed externally from the top, from the bottom and from the side by means of arms. platform core 1.2 is inseparably connected by tangential surfaces to the top outer layer of platform 1.1 and the lower outer layer of platform 1.3 permanently e.g. by means of glue or rivets arranged on the shorter and/or longer lateral surface of the platform between the connected elements. Top outer layer 1.1 forms the upper surface of platform 1 as well as the outer side surfaces of the platform. lower outer layer 1.3 forms the bottom surface of platform 1 and reinforces the surfaces formed by top outer layer 1.1 from the inside.

Top outer layer 1.1 and lower outer layer 1.3 are made of steel, preferably galvanized steel, aluminum, preferably anodized aluminum, plywood or a laminate composite (laminate). Each layer can be made of the same material or different materials. In an embodiment, the thickness of the top and lower outer layers varies between 0.4 mm and 9 mm. core 1.2 thickness is a minimum of 50% of the platform thickness created by the core and the outer layers in the longitudinal section, which ensures stability and reliability of platform construction. core 1.2 is made of a light material, i.e. of low density, e.g. plastic such as polypropylene or light metals such as aluminum, with a cellular structure e.g. in the form of a honeycomb. In the embodiment, the core thickness varies from 10 mm to 30 mm.

As shown in Fig. 2, in the invention embodiment , in the case of a trailer platform with sideboards, the platform corners - corner formed by the converging arms, i.e. the shorter sidearm of platform 1 and the longer sidearm of platform 1 are cut out over the entire platform thickness at an angle of 90° from the length of 30 mm from the edge towards the shorter and longer arm. The cut in length may not exceed 6% of the length of the core, and the cutout in the width of the core may not exceed 12% of the width of the core. If the corners are not cut in the platform, the platform connection with the sides and/or accessories is carried out by means of known assembly techniques, e.g. using bent sheet at the corners of the trailer.

### Example 2. The platform according to another embodiment, equipped with mounting angles

In the embodiment of the platform shown in Figs. 4 and 5, the platform is built similarly as in example 1 and contains elements such as top outer layer 1.1, core 1.2, lower outer layer 1.3, and is additionally equipped with reinforcing elements in the form of upper angle panel 1.4.1 and lower angle panel 1.4.2. Outer layers have the form of a cuboid panel - base without any additional shaped arms, which is covered from the bottom - lower outer layer and from the top - lower outer layer. Outer layers cover the core 1.2 only from the top and from the bottom. Sides of core 1.2 are covered by angle panels. Top outer surface 1.1, core 1.2 and lower outer layer 1.3 form a cuboid after joining, (e.g. gluing), which is enclosed on shorter and longer sides - the base by upper angle panel 1.4.1 and lower angle panel 1.4.2 of the platform. The angle panels are formed by two sides connected together at an angle of 90°. In this case, two angle panels are used for each side of the platform, one of them covers the side and part of the length of one of the bases - the outer layer and the other angle panel covers the side of the platform and part of the length of the second base not yet covered, as shown in Fig. 5. The inner side of the horizontal arm of upper angle panel 1.4.1 is connected inseparably, e.g. by means of gluing with the top surface of top outer layer 1.3, and the outer surface of the vertical arm of upper angle panel 1.4.1 is connected inseparably, e.g. by means of gluing, to the inner surface of the vertical arm of lower angle panel 1.4.2, whose horizontal arm is connected inseparably to the lower surface of lower outer layer 1.3 of the platform from the inside. The shape of top outer layer 1.1 and lower outer layer 1.3 has the form of flat surfaces.

Core 1.2 is located in a space enclosed from the top and from the bottom, formed between superposed top outer layer 1.1 and lower outer layer 1.3, thus filling the entire space formed between outer layers and the vertical arm of lower angle panel 1.4.2 oriented perpendicularly to the surface of platform 1. Core 1.3 of platform 1 is thus enclosed externally from the top, from the bottom and from the side. Platform core 1.2 is inseparably and permanently connected by tangential surfaces to the top outer layer of platform 1.1 and the lower outer layer of platform 1.3 e.g. by means of glue or rivets arranged between the connected elements. top outer layer 1.1, together with the outer surface of the horizontal arm of the upper angle panel 1.4.1, form the upper surface of platform 1. lower outer layer 1.3, together with the outer surface of the horizontal arm of the lower angle panel, form the lower surface of platform 1.

Upper angle panel 1.1. and lower angle panel 1.4.2 are made of steel, preferably galvanized steel, aluminum, preferably anodized aluminum, with thickness up to 2mm. Top outer layer 1.1. and lower outer layer 1.3 are made of steel, preferably galvanized steel, aluminum, preferably anodized aluminum, plywood or a laminate composite (laminate) with thickness ranging from 0,4 mm to 9 mm. The length of one angle panel covering the outer layer cannot exceed 5% of the platform width . In the embodiment, core 1.2 is made of a light material, i.e. of low density, e.g. plastic such as polypropylene or light metals such as aluminum, with a cellular structure, e.g. in the form of a honeycomb. In the embodiment, the core thickness varies from 10 mm to 30 mm. The thickness of core 1.2 is a minimum of 50% of the platform thickness created by the core and the outer layers in the longitudinal section, which ensures stability and reliability of platform construction.

The platform in the embodiment contains reinforcing elements in the form of upper angle panel 1.4.1 and lower angle panel 1.4.2 to increase the stiffness of the platform by joining together the outer layers, top outer layer 1.1 and lower outer layer 1.3, which affects the mechanical strength of the platform. These angle panels are also used to increase the platform durability to concentrated loads resulting from the connection of the platform to the side member of the trailer.

As shown in Fig. 4, similar to example 1 of the invention, in the case of using a trailer platform equipped with sideboards, the platform corners formed by the converging vertical arms of upper angle panels 1.4.1 are cut out over the entire platform thickness at an angle of 90° and the length of 30 mm from the edge in the direction of the shorter and longer arm. The cut in length must not exceed 6% of the core length, and in width it must not exceed 12% of the core width. If the corners are not cut in the platform, the platform connection with the sides and/or accessories is carried out by means of known assembly techniques, e.g. by bent sheet at the corners of the trailer.

### Example 3. The platform according to another embodiment, equipped with a platform ferrule

In the embodiment shown in Fig. 4 and Fig. 6, the platform is formed in the same way as in example 1, being comprised of elements such as upper outer layer 1.1, core 1.2, lower outer layer 1.3 and ferrule 1.4. Instead of the angle panels shown in example 2, it is possible to use ferrule 1.4 in the form of a channel formed by three connected walls covering the whole side of the platform - core 1.2 and through the upper and lower base of the ferrule of the platform - the upper outer layer and the lower outer layer. In this variant, one ferrule for one side of the platform is sufficient, i.e. four fittings for the entire platform as opposed to 8 angle panels according to example 2. Platform ferrule 1.4 has the form of an open profile with a channel section in which the inner surface of the upper arm is inseparably connected to the top outer layer of the platform 1.1 and the inner surface of the lower arm of platform ferrule 1.4 is inseparably connected to the lower outer layer of the platform 1.3. The vertical surface of platform ferrule 1.4 is inseparably connected with upper outer layer 1.1, lower outer layer 1.3 and core 1.2 of platform 1, e.g. by means of glue distributed on the side surface of the platform.

In another embodiment, shown in Fig. 7, upper outer layer 1.1 is shorter and narrower than core 1.2 of the platform and lower outer layer 1.3 of the platform by a maximum of 10%, which corresponds to the double width of the upper arm of platform ferrule 1.4 in such a way that after joining together, e.g. by gluing, the upper surface of core 1.2 of the platform with the inner surface of upper outer layer 1.1 of the platform and the inner surface of the upper arm of ferrule 1.4, it forms a flat surface of platform 1. The line separating the platform ferrule from the upper outer layer in the embodiment is located at a distance of 40 mm from the long edge of the platform.

In another embodiment, shown in Fig. 8, upper outer layer 1.1 and lower outer layer of the platform are shorter and narrower than core 1.2 of the platform by the double width of the upper arm and the lower arm of ferrule 1.4 of the platform in such a way that after joining them together, e.g. by gluing, the upper surface of platform core 1.2 with the inner surface of upper outer layer 1.1 and the inner surface of upper ferrule arm 1.4 as well as the lower surface of platform core 1.2 with the inner surface of lower outer layer 1.3 and the inner surface of the lower arm of ferrule 1.4, the upper surface of the platform and the lower surface of the platform create a flat surface without edges protruding beyond the prism contour.

Core 1.2 is located in a space enclosed from the top and from the bottom, formed between superposed top outer layer 1.1 and lower outer layer 1.3, thus filling the entire space formed between outer layers and the vertical arm of ferrule 1.4 oriented perpendicularly to surface 1 of the platform, core 1.3 of platform 1 is thus enclosed externally from the top, from the bottom and from the side. platform core 1.2 is inseparably connected by tangential surfaces to the top outer layer of the platform 1.1 and the lower outer layer of the platform 1.3 permanently e.g. by means of glue or rivets arranged between the connected elements. upper surface layer 1.1, together with the outer surface of the upper horizontal arm of ferrule 1.4 of the platform, forms the upper surface of the platform. lower surface layer 1.3, together with the outer surface of the lower horizontal arm of ferrule 1.4 of the platform, forms the bottom surface of the platform.

Ferrule 1.4 of the platform is made of steel, preferably galvanized steel or aluminum, preferably anodized aluminum with a thickness of up to 2 mm. Top outer layer 1.1. and lower outer layer 1.3 are made of steel, preferably galvanized steel, aluminum, preferably anodized aluminum, plywood or a laminate composite (laminate) with a thickness in the range from 0,4 mm to 9 mm. Arm length of ferrule 1.4 of the platform covering the upper and/or lower outer layers must not exceed 5% of the entire platform width. core 1.2 is made of a light material, i.e. of low density, e.g. plastic such as polypropylene or light metals such as aluminum, with a cellular structure e.g. in the form of a honeycomb. In the embodiment, the core thickness varies from 10 mm to 30 mm. The thickness of core 1.2 is a minimum of 50% of the platform thickness created by the core and the outer layers in the longitudinal section, which ensures stability and reliability of platform construction. The platform in the embodiment contains reinforcing elements in the form of ferrule 1.4 of the platform to increase the rigidity of the platform by joining the outer layers, upper outer layer 1.1 and lower outer layer 1.3, which affects the mechanical strength of the platform. These ferrules also serve to increase the strength of the platform for point loads resulting from connecting the platform to the side profile of the trailer.

As shown in Fig. 4, as in the first embodiment of the invention, in the case of a trailer platform equipped with sideboards, the corners of the platform - corner formed by the converging part between the vertical arms of ferrules 1.4 of the platform are cut out over the entire platform thickness at an angle of 90 ° along the length of the platform, 30 mm from the edge towards the shorter and longer arm. The cutout in length may not exceed 6% of the core length , and the cutout in the width of the core may not exceed 12% of the core width. If the corners are not cut in the platform, the connection of the platform with the sides and/or accessories is carried out by means of known assembly techniques, e.g. by bent plates in the corners of the trailer.

### Example 4. A trailer composed of the platform

The platform as described in examples 1, 2 and 3 can be used as a floor in a trailer dedicated for land transportation of cargo. As shown in Fig. 9, the trailer can be equipped in addition to platform 1 - trailer floor in lamp panel 2, drawbar assembly 3 and chassis 4.

The platform according to examples 1, 2 and 3 used as a floor in a trailer for land transportation is additionally equipped with side member 1.5, i.e. a structural element in the form of a longitudinal member (structural element placed along length of the floor of the trailer to transfer bending and shearing loads), which is fastened to the underside of the platform on both its sides parallel to its edge in order to attach drawbar 3 and chassis 4. A general view of the platform of the trailer equipped with reinforcing elements and assembly elements is shown in Fig. 10.

Reinforcing elements in the form of side member 1.5 and front member 1.6 are intended to increase section modulus of the platform in the direction perpendicular to length of the floor of the trailer for side member 1.5 and in the transverse direction for front member 1.6. Front member 1.6 is a structural element in the form of a beam, which is attached to the bottom of the platform at the front of the platform and is composed of two separate elements. The side member and front member are designed to ensure adequate strength of the trailer by increasing the section modulus of the platform in both directions and enable transfer of loads from the payload located on platform 1 to chassis 2 and drawbar 3.

The platform is connected inseparably or separably by known connection techniques with other trailer parts, including chassis 2 and drawbar 3. The combination of these trailer elements with the platform is realized by means of a detachable connection to platform side member 1.5, e.g. by bolted connection, which is important from the point of view of easy replacement of the chassis, which includes the axle with wheels and drawbar, as well as allowing the drawbar to rotate around the point of its attachment. It is also possible to use a non-detachable connection of the drawbar and chassis with side member 1.5 by means of the riveting technique, in which the drawbar will not be able to turn relative to the point of attachment. The drawbar and chassis are fastened to side member 1.5, while the lamp panel is attached to side member 1.4 and to platform 1.

The platform used as a floor includes connecting elements to connect it to side member 1.5 and front member 1.6. The connecting elements can be in the form of a screw with a nut , rivets or glue. The platform is equipped with mounting elements in the form of front mounting angle panels 1.7, i.e. angle panels attached to the side surfaces of the platform arms.

The platform is equipped with spacing elements in the form of sleeve 1.8 and / or spacing member 1.11.

Fig. 11 shows a detachable connection of platform 1 according to embodiment 1 to side member 1.5 of platform 1 by means of a bolted connection.

Fig. 12 shows a detachable connection of platform 1 according to embodiment 2 to side member 1.5 of platform 1 by means of a bolted connection.

Fig. 13 shows a method of inseparable connection of platform 1 according to embodiment 1 to the side profile of the platform 1.5 by means of a riveted connection.

Fig. 14 shows a method of inseparable connection of platform 1 according to embodiment 1 to side member 1.5 of the platform by means of a riveted connection with the use of a spacing element in the form of a profile with a rectangular section.

In the embodiments shown on Figs. 11, 12, 13 and 14, side member 1.5 has the form of an open section in the shape of a channel, where longer arms of the frame are parallel to the arms of the platform such that side member 1.5 is connected to platform 1 via shorter side (web) of the channel, which is parallel to the horizontal plane of the platform. In another embodiment of side member 1.5, it can have the form of a profile with a rectangular cross-section in which the shorter side adheres to lower outer layer 1.3. of the platform, side member 1.5 and front member 1.6 are made of steel, preferably galvanized steel, aluminum, preferably anodized aluminum or a composite material, preferably a laminate.

In the embodiment shown in Fig. 11, the platform according to embodiment 1 is comprised of elements such as upper outer layer 1.1, lower outer layer 1.3 and a middle layer - core 1.2, which are detachably connected to platform member 1.5 e.g. by means of bolted connection 1.9 connecting upper outer layer 1.1 to the inner horizontal surface of side member 1.5 of the platform. In order to strengthen the connection and provide sufficient resistance to bearing strength, the mounting hole in the platform is additionally provided with a spacing element in the form of sleeve 1.8, which is cylindrical in shape with open bases (tube) which is placed inside platform 1 in such a way that the upper end face of sleeve 1.8 adheres to the lower face of upper outer layer 1.1 and the lower end face of sleeve 1.8 adheres to the upper face of lower outer layer 1.3, providing increased stiffness of the joint in the direction of axial forces normal to the platform resulting from the bolted connection.

In a different embodiment, shown in Fig. 12, the trailer platform is provided with a platform according to embodiment 2 and comprises of upper outer layer 1.1, core 1.2, lower outer layer 1.3, upper angle panel 1.4.1 and lower angle panel 1.4.2. The platform is detachably connected to side member 1.5, e.g. by means of bolted connection 1.9 connecting the lower face of the horizontal arm of lower angle panel 1.4.2 to the horizontal part of the platform side member 1.5. In order to strengthen the connection and provide sufficient resistance to bearing stress, the mounting hole in the platform is additionally equipped with a spacing element in the form of sleeve 1.8, which is placed inside platform 1 in such a way that the upper end face of sleeve 1.8 adheres to the lower face of the horizontal arm of upper angle panel 1.4.1 and the lower end face of sleeve 1.8 adheres to the upper face of the horizontal arm of lower angle panel 1.4.1 providing increased stiffness of the joint in the direction of axial forces normal to the platform resulting from the bolted connection.

As a replacement for angle panels 1.4.1 and 1.4.2, as shown in example 2, it is possible to use ferrule 1.3 of platform 1 as in example 3 of the platform in the form of a U-shaped channel formed by three connected walls covering the entire side of the platform - core 1.2 and through the upper and lower base of the platform ferrule - the upper outer layer and the lower outer layer. In this variant, the connection of platform side member 1.5 to platform 1 takes place by connecting the lower horizontal surface of the lower arm of platform ferrule 1.4 with the outer face of platform side profile 1.5. In order to strengthen the connection and provide sufficient resistance to bearing stress, the mounting hole in the platform is additionally equipped with a spacing element 1.8 in the form of sleeve 1.8, which is placed inside platform 1 in such a way that the upper end face of sleeve 1.8 adheres to the lower face of the upper horizontal arm of ferrule 1.4 and the lower end face of sleeve 1.8 adheres to the upper face of the lower horizontal arm of ferrule 1.4 providing increased stiffness of the joint in the direction of axial forces normal to the platform resulting from the bolted connection.

The sleeve is made of steel, preferably of high-strength steel or of light alloys, preferably of aluminum.

Another possible connection method shown in Fig. 13 is the use of an inseparable connection, e.g. by riveting using steel rivets, preferably made of galvanized steel, high strength steel or aluminum, in which the inner horizontal surface of side member 1.5 of platform 1 is connected to lower outer layer 1.3 of platform 1 according to embodiment 1 by means of rivets 1.10.

In a different embodiment, shown in Fig. 14, in order to reinforce a riveted connection, the trailer platform according to embodiment 1 is comprised of upper outer layer 1.1, core 1.2, lower outer layer 1.3 and a spacing element in the form of spacing member 1.11. The spacing member is a structural element in the form of a longitudinal member oriented parallel to the long side of the platform with a thin-walled rectangular cross-section, which is completely covered from the outside from the top, bottom and side of the platform through the outer layers. Spacing member 1.11 is positioned over the entire length of the platform arms, along the long and short arm of platform 1. Spacing member 1.11 is located between the lower surface of upper outer layer 1.1, upper surface of the lower outer layer 1.3, core 1.2 and the inner face of upper outer layer arm 1.3. Preferably, at contact with upper outer layer 1.1 and lower outer layer 1.3, spacing member 1.11 is connected to them inseparably e.g. by gluing. In order to connect platform 1 to side member 1.5, the outer surface of the lower outer layer is connected inseparably, e.g. by means of a riveting technique with the outer surface of side member 1.5 of platform 1. The spacing member is made of steel, preferably galvanized steel or aluminum, preferably anodized aluminum.

In a different embodiment of the trailer as shown in Fig. 15, trailer platform 1 according to embodiment 1 is provided with side members 1.5 in the shape of an open profile with an omega- shaped cross-section made of steel, preferably galvanized steel or aluminum, preferably anodized aluminum. In the embodiment, the connection of side member 1.5 and platform 1 according to embodiment 1 is shown in Fig. 16. The the omega-shaped in section side member is connected to upper outer layer 1.1 and lower outer layer 1.3 of the platform inseparably, e.g. by means of rivets 1.10 in a way that lower outer layer 1.3 rests on a horizontal section of side member 1.5, which constitutes the support for the platform. The bending radius of lower outer layer 1.3 between the surface forming the bottom of the platform and the vertical arm of the platform makes it possible to adhere its outer part to the inner vertical wall of side member 1.5. In this embodiment, upper outer layer 1.1 of platform 1 has the form of a C-shaped section and covers lower outer layer 1.3 and side- member edge 1.5 with its arms.

### Example 5. A trailer composed of the platform and a lamp panel

The trailer comprises of the platform described in examples 1, 2 or 3, equipped with a drawbar and a chassis according to example 4, as well as a lamp panel. The trailer with lamp panel 2 and side member 1.5 connected to platform 1 as in example 4 is shown in Fig. 17. Fig. 18 shows lamp panel 2 that includes lamp mounting profile 2.1, rear angle cover 2.2, rear attachment profiles 2.3, bumper 2.4, platform bracket 2.5 and reinforcing bracket 2.6. The view of the lamp panel from the inside of the trailer is shown in Fig. 19. Lamp mounting profile 2.1 is inseparably connected to two rear angle covers 2.2 by means of rivets placed in lamp profile attachment points 2.1.1. Lamp attachment points 2.1.2. are used to attach the trailer lamps, while license plate attachment points 2.1.3 are used to attach a license plate. Each of the two rear attachment profiles 2.2 is connected inseparably to the mounting elements in the form of rear attachment profiles 2.3 in profile attachment points 2.1.4. Platform bracket 2.5 is also permanently attached to rear attachment profiles 2.3. Mounting elements included in the lamp panel in the form of rear attachment profiles 2.3 create, together with the front members of the platform, elements designed to attach the accessories and/or sideboards of the trailer.

Fig. 19 is an axonometric view of the lamp panel that shows lamp panel attachment points of platform 1 and side member 1.5 to lamp panel 2. The connection of lamp panel 1 to platform 1 is done by connecting lamp mounting profile 2.1 to lower outer layer 1.3 of platform 1 by means of lamp profile attachment points 2.7 fixing the lamp profile to the underside of the platform separably (by means of a bolted connection) or inseparably (by means of a riveting technique). In order to provide sufficient durability of the connection, both rear angle covers 2.2 are connected to the arms of upper outer layer 1.1 by means of lamp panel attachment points 2.8.

In addition, to strengthen the connection, platform bracket 2.5, reinforcing angle 2.6 and rear angle cover 2.2 are attached to side member 1.5 by means of lamp panel attachment points 2.9.

The lamp panel with its components is made of steel, preferably galvanized steel or aluminum, preferably anodized aluminum.

### Example 6. The trailer comprises the platform and sideboards

The trailer comprises a platform as described in an example 1, 2 or 3, equipped with a drawbar and an undercarriage according to example 4 and a lamp panel according to example 5. The trailer according to the invention can function as a platform for transporting special loads. It can also be fitted with sideboards.

Fig. 20 shows a trailer equipped with sideboards. In an embodiment of the invention, the platform corners formed between the arms i.e. the shorter arm at the front of platform 1 and the longer arms at the sides of platform 1, are cut over the common edge belonging to the short side wall of platform 1 and the long side wall of platform 1 over the entire thickness at an angle of 90 ° over a length of 30 mm towards the shorter and longer arm to match front attachment profile 1.7.2. In the exemplary embodiment, the platform includes mounting elements in the form of front attachment profiles 1.7.2 and rear attachment profiles 2.3 for a connection of long sideboard 5.1 to platform 1 and lamp panel 2. Figure 21 shows a view of front mounting angle 1.7 of platform 1 equipped with front angle cover 1.7.1 and front attachment profile 1.7.2 in the form of a post made of steel or aluminum, preferably galvanized steel or anodized aluminum. In a platform according to example 1, front angle cover 1.7.1 is fixed inseparably, e.g. by means of rivets, preferably galvanized steel rivets or stainless steel rivets, to upper outer layer 1.1 of platform 1 and lower outer layer 1.3 through angle attachment points 1.7.3 to side member 1.5 of the platform through side member attachment points 1.7.4 and to front member 1.6 of the platform through front member attachment points 1.7.5. Front angle cover 1.7.1 is made of steel, preferably galvanized steel or aluminum, preferably anodized aluminum.

In a different embodiment of the platform according to example 2, front angle cover 1.7.1 is connected inseparably, e.g. by means of rivets, preferably galvanized steel rivets or stainless steel rivets, to the vertical arm of the outer surface of upper angle 1.4.1 and to the vertical arm of lower angle 1.4.2 through angle attachment points 1.7.3, to side member 1.5 of the platform through side member attachment points 1.7.4 and to front member 1.6 of the platform through front member attachment points 1.7.5.

In the embodiment of the platform according to example 3, front angle cover 1.7.1 is connected inseparably, e.g. by means of rivets, preferably galvanized steel rivets or stainless steel rivets, to the outer surface of the vertical arm of platform ferrule 1.4 through angle attachment points 1.7.3, to side member 1.5 of the platform side member attachment points 1.7.4 and to front member 1.6 of the platform through front member attachment points 1.7.5.

Front attachment profile 1.7.2 is inseparably (e.g. with rivets placed in profile attachment points 1.7.6) attached to the inner surface of the front angle cover, which forms an assembly element of a trailer, the upper face of which forms a flat surface with the upper platform surface. Additional sideboards attachment points 1.7.7 are used for attaching long sideboards 5.1 of the trailer to platform 1. The sideboards of the trailer form an accessory of the trailer and can be mounted to platform 1 and disassembled depending on the type of transported load. In the case of non-detachable sideboards, front accessory attachment profile 5.1.4.1 and rear accessory attachment profile 5.1.4.2 are connected inseparably, e.g. riveted to front attachment profile 1.7.2 and rear attachment profile 2.3. In the case of detachable sides, front accessory attachment profile 5.1.4.1 and rear accessory attachment profile 5.1.4.2 are separably connected to front attachment profile 1.7.2 and rear attachment profile 2.3 by bolted connection.

Fig. 22 shows an axonometric view of the trailer sideboard . Fig. 23 shows a side view of the trailer sideboard showing connection of the sideboard to the platform. Long sideboard 5.1 shown in Fig. 13 consists of sideboard wall 5.1.1, sideboard channel 5.1.2, attachment profile 5.1.3 and accessory attachment profiles 5.1.4 through which sideboards 5.1 are attached to platform 1. Attachment profiles 5.1.3 are connected to sideboard channel 5.1.2. separably, by means of a bolted connection, or inseparably, by means of rivets, preferably galvanized steel rivets or rivets made of high strength steel, which are fastened to the long sideboard 5.1.1 through plate 5.1.6 by means of bolted connection, or inseparably, by means of rivets, preferably galvanized steel rivets. Inside the sideboard channel of the long sideboard, there is an accessory attachment profile 5.1.4, front accessory attachment profile 5.1.4.1 in the front of the trailer and rear accessory attachment profile 5.1.4.2 in the rear of the trailer, which is attached to sideboard channel 5.1.2 and attachment profile 5.1.3 through holes 5.1.5. In order to assemble the platform sideboard , front accessory attachment profile 5.1.4.1. is placed inside front attachment profile 1.7.2, rear accessory attachment profile 5.1.4.1. is placed inside rear attachment profile 2.3 and both of them are connected inseparably by means of bolts through sideboards attachment points 1.7.7 to front mounting angle 1.7 and through holes 2.10 to lamp panel 2. The sideboard with its components excluding the sideboard wall is made of steel, preferably galvanized steel or aluminum, preferably anodized aluminum. Depending on the expected level of load depending on the permissible total weight of the trailer, the sideboards may be equipped with additional reinforcing elements in the form of plates 5.1.6 and/or the sideboard core 5.1.7. As shown in Fig. 24, the sideboard, depending on the version, can be additionally reinforced with plate 5.1.6 and sideboard core 5.1.7. The use of a particular version of the cross-section of the sideboard depends on the required stiffness of the sideboard. The sideboard wall according to the invention is made of steel, preferably galvanized steel, aluminum, preferably anodized aluminum, plywood or laminate composite (laminate), and formed in such a way that the three bends in the upper part of the side create a closed profile structure oriented along the side, which function is ensuring high stiffness of the sideboard. The bends made inside the sideboard wall are shaped in order to provide adequate aesthetics and increase the stiffness to minimize vibrations of the sideboard. If necessary, sideboard wall 5.1.1 can be equipped with additional reinforcement from the inside of the trailer in the form of plate 5.1.6, which can be made of steel, aluminum or plywood. The task of the sheet is to provide additional stiffness of the sideboard and to provide a flat surface inside the trailer. In the case of further necessity to increase the sideboard stiffness , it can be additionally equipped with sideboard core 5.1.7, which task, as in the case of the platform, is to ensure high stiffness-to-weight ratio of the sideboard. Sideboard core 5.1.7 is inseparably connected to the inner wall of sideboard wall 5.1.1, e.g. by means of glue and, if plate 5.1.7 is present, inseparably connected to plate 5.1.7, e.g. by means of gluing. Plate 5.1.7 is connected to sideboard wall 5.1.1. separably by means of screws or inseparably by means of rivets, preferably galvanized steel rivets. The core is made of a light material, i.e. of low density, e.g. plastic such as polypropylene or light metals such as aluminum, with a cellular structure e.g. in the form of a honeycomb. This solution is innovative and allows for elimination of the side brackets and additional bracing elements to ensure adequate stiffness of the sides. The plate is made, similarly to the sideboard wall, of steel, preferably galvanized steel, aluminum, preferably anodized aluminum, plywood or a laminate composite (laminate).

### Example 7. A cargo trailer equipped with rigid roof and sideboards

The trailer is comprised of the platform as described in example 1, 2 or 3 equipped with the drawbar and the undercarriage according to example 4, the lamp panel according to example 5 and the sideboards according to example 6.

The trailer according to the invention can be used as a trailer with detachable sideboards and as a cargo trailer. The axonometric view of the cargo trailer is shown in Fig. 25.

Example 6 represents a trailer equipped with sideboards consisting of two long sideboards 5.1, two short sideboards 5.2, platform 1, drawbar 3, lamp panel 2 and undercarriage 4, which is additionally equipped with rigid roof 7. The roof is fastened to long sideboard 5.1 and short sideboard 5.2 inseparably, by means of rivets, or detachably, by means of a bolted connection. Fig. 26 shows a cross-section of long sideboard 5.1 with rigid roof 7. The rigid roof consists of upper skin 7.1, core 7.2 and lower skin 7.3. Lower skin 7.3 is inseparably connected to sideboard wall 5.1.1 by means of rivets 7.4, which is enabled by mounting holes 7.5 for providing access to the rivet tool. Such a solution makes it possible to mount the roof of a built-in trailer very easily, while maintaining similar roof manufacturing technology to a trailer platform. This allows for shortening production time and reducing production costs. In addition, the trailer roof made of a sandwich panel has a beneficial effect on the trailer strength . Rigid roof 7 has a sandwich structure made of materials such as those used for the platform in example 1. In the embodiment, the height of the trailer sideboards, long sideboards 5.1 and short sideboards 5.2 is from 35 cm to 300 cm.

Roof skins are made of steel, preferably galvanized steel, aluminum, preferably anodized aluminum, plywood or a laminate composite (laminate).

The roof core is made of a light material, i.e. of low density, e.g. plastic such as polypropylene or light metals such as aluminum, with a cellular structure e.g. in the form of a honeycomb.

### Example 8. A study of effectiveness and properties of the platform and the trailer containing the platform according to the invention

Essential advantages of the platform according to the embodiment as presented in detail in examples 1-3 are connected with the lack of necessity to use supplementary structural elements in the form of load carrying frame of the trailer to maintain proper rigidity of the platform. The platform according to the invention has similar stiffness to commonly used solutions, e.g. plywood and steel sheets that are widely used in trailers, with simultaneous weight reduction of min. 5%, which was confirmed by experimental and numerical testing. In the platform according to embodiment 1, it is an advantage to be able to provide a flat platform surface without protruding edges. By using the platform construction according to the invention, the negative impact of weather conditions on the platform is significantly reduced by minimizing the contact surface of the environment with the structural elements of the platform. The construction of the platform, thanks to the use of the outer layers, enables to achieve a flat surface, which makes it easier than ever to transport objects on the platform without being blocked by protruding rivets or screws connecting the platform with the side members and undercarriage.

An advantage resulting from the platform construction according to embodiment 2 is connected with the possibility of shaping the platform in the form of a core with superimposed outer layers and equipping it with angle panels, preferably commercially available angle panels that can be placed with an offset, allowing the same dimensions of the angle panel to be used with different platform thicknesses. In addition, in the embodiment of platforms 2 and 3, it is not necessary to apply bending operations in production, which significantly reduces the platform manufacturing costs.

### Mass test of the platform according to the invention

Table 1 shows the mass values of the designed trailers according to the invention described in embodiment 6. The test was carried out in such a way that the trailers according to the invention were modeled together with the material data and their mass was read from the CAD model. The results of the measurements were compared with the solutions available on the market, demonstrating mass reduction thanks to the trailer platform. Each of the designed trailers according to the invention in embodiment 6 has been subjected to numerical strength tests consisting in static loading of the trailer in such a way that the total reaction value on the wheels and the drawbar attachment point was twice the permissible total weight, which confirmed their strength. In order to experimentally confirm the mass of the trailer according to the invention in variant 6, the trailer according to the invention were manufactures and experimentally tested and the measured trailer weight was compared to the existing trailers on the market. Platform variants according to examples 1-3 have similar mass due to the comparable volume of material from which each variant is made, therefore only the platform according to example 1 was tested.

**Table 1: Comparison of the weight of the trailer containing the platform with currently known solutions**

| Description of the trailer | Measured mass [kg] | Average mass of known solutions in similar size containing floor, sideboards and lamp panel [kg] |
|---|---|---|
| Trailer according to the embodiment as in example 6 equipped with the platform according to the example 1, sideboards and lamp panel made of aluminum, where the core of the platform was made of polypropylene honeycomb core. | 111,95 | 211 |

Table 1 presents the total mass estimated on the basis of CAD (Computer Aided Design) models, through which a significant reduction in mass compared to the existing trailers has been demonstrated - estimated mass of the designed trailer according to the invention in embodiment 6 together with the sideboards was measured to be 111.95 kg. The weight of the trailer equipped with the platform, lamp panel without the sideboards amounted to 92.48 kg.

An experimentally weighed trailer according to the invention comprised of the platform according to example 1, the lamp panel, the undercarriage and the drawbar assembly according to example 5 had a mass of 89.9 kg, which confirms the mass value obtained from the CAD model.

The strength testing carried out on the platform according to the invention indicated that the use of the platform according to the invention in the trailer construction of a enabled reducing the weight of car trailers by min. 20%, maintaining their strength and construction stability as compared to the trailer with a known floor construction in a comparable class and size.

Research shows that due to the use of the platform comprised of a 3-layer structure and having other elements as in the invention, it is possible to significantly reduce the weight of the trailer but at the same time maintain rigidity of the whole structure, and in particular of the trailer platform and its sideboards.

## Claims

1. Trailer platform for land cargo transport, which forms the trailer floor, the platform being in a form of a cuboid, the platform comprises an upper outer layer (1.1) and a lower outer layer (1.3) having form of an open profile, wherein each outer layer is comprised of a base laterally mounted on four sides with the arms between which a one-side open space is formed, so that the two outer layers are mutually overlapping and the core (1.2) of the platform (1) is connected to the outer layers adjacent to the core (1.2) while the cores in located in the space formed between the connected upper outer layer (1.1) and lower outer layer (1.3) that create a space closed from the top, bottom and on the sides, wherein upper outer layer (1.1) and the lower outer layer (1.3) are made of metal, metal alloys or composite materials, while the core (1.2) has the form of a cellular material, preferably honeycomb, where the core (1.2) thickness is a minimum of 50% of the platform thickness formed by the core and the outer layers, **characterized in that**, the platform's corners is formed between the arms are cut through the entire thickness of the platform on a part of the length of the arms at an angle of 90 ° relative to the base.

2. The platform according to claim 1, wherein the upper outer layer (1.1) with its base and arms covers the space formed by the lower outer layer (1.3).

3. The platform according to claim 1 or 2, wherein the upper outer layer (1.1) and the lower outer layer (1.3) are made of galvanized steel or anodized aluminum or painted aluminum.

4. The platform according to claim 1 or 2 or 3, wherein the core (1.2) of the platform (1) is made of plastic, preferably polypropylene, paper or metal, preferably aluminum.

5. The platform according to claim 1, wherein the minimum thickness of the core (1.2) is 10 mm, and the maximum thickness of each of the outer layers is 9 mm.

6. Trailer for land cargo transport comprises a base created by the platform as described in one of the claims 1-5 and a sideboard, wherein the platform is comprised of mounting elements to the sideboards in the form of front attachment profiles (1.7.2) placed in the platform (1) and rear attachment profiles (2.3) placed in the lamp panel (2).

7. The trailer according to claim 6, wherein the long sideboard (5.1) is comprised of a sideboard wall (5.1.1), sideboard channel (5.1.2), attachment profile (5.1.3) and accessory attachment profiles (5.1.4) connecting long sideboard (5.1) to the platform (1).

8. The trailer according to claim 6 or 7, wherein the sideboard is reinforced with a plate (5.1.6) made of steel, preferably galvanized steel, aluminum, preferably anodized aluminum, plywood or a laminate composite, preferably a laminate.

9. The trailer according to claim 6, wherein a sideboard core (5.1.7) is located inside the enclosed space between the sideboard wall (5.1.1) and the plate (5.1.6), made of plastic, preferably polypropylene, paper or a metal, preferably aluminum and/or a cellular material.

10. The trailer according to claim 6, wherein the side member (1.5) is attached to the side wall of the platform (1)

## Patentansprüche

1. Anhängerplattform für den Landgütertransport, die den Anhängerboden bildet, wobei die Plattform die Form eines Quaders hat, die Plattform besteht aus einer oberen Außenschicht (1.1) und einer unteren Außenschicht (1.3) in Form eines offenen Profils, wobei die Außenschichten jeweils aus einer an vier Seiten seitlich angebrachten Basis mit Armen bestehen, zwischen denen ein einseitig offener Raum gebildet wird, so dass die beiden äußeren Schichten einander überlappen, und der Kern (1.2) der Plattform (1) mit den am Kern (1.2) angrenzenden Außenschichten verbunden ist, während der Kern in dem zwischen der verbundenen oberen Außenschicht (1.1) und unteren Außenschicht (1.3) gebildeten Raum angeordnet ist, so dass ein nach oben, unten und an den Seiten geschlossener Raum entsteht, wobei die obere Außenschicht (1.1) und die untere Außenschicht (1.3) aus Metall, Metalllegierungen oder Verbundwerkstoffen bestehen, während der Kern (1.2) die Form eines zellularen Materials, vorzugsweise einer Wabe, aufweist, wobei die Stärke des Kerns (1.2) mindestens 50 % der vom Kern und den Außenschichten gebildeten Plattformdicke beträgt, **dadurch gekennzeichnet, dass** die zwischen den Armen gebildeten Plattformecken auf einem Teil der Länge der Arme durch die gesamte Dicke der Plattform hindurch in einem Winkel von 90° zur Basis geschnitten sind.

2. Plattform nach Anspruch 1, **dadurch gekennzeichnet, dass** die obere Außenschicht (1.1) mit ihrer Basis und ihren Armen den durch die untere Außenschicht (1.3) gebildeten Raum abdeckt.

3. Plattform nach Anspruch 1 oder 2, **dadurch gekennzeichnet, dass** die obere Außenschicht (1.1) und die untere Außenschicht (1.3) aus verzinktem Stahl oder eloxiertem Aluminium oder lackiertem Aluminium bestehen.

4. Plattform nach Anspruch 1 oder 2 oder 3, **dadurch gekennzeichnet, dass** der Kern (1.2) der Plattform (1) aus Kunststoff, vorzugsweise Polypropylen, Papier oder Metall, vorzugsweise Aluminium, besteht.

5. Plattform nach Anspruch 1, **dadurch gekennzeichnet, dass** die minimale Dicke des Kerns (1.2) 10 mm und die maximale Dicke jeder der Außenschichten 9 mm beträgt.

6. Anhänger für den Landgütertransport umfasst eine Basis, die durch die Plattform gemäß einem der Ansprüche 1-5 und eine Bordwand gebildet wird, wobei die Plattform aus Befestigungselementen besteht, die an Bordwänden befestigt werden und die als vordere Befestigungsprofile (1.7.2) in der Plattform (1) und hintere Befestigungsprofile (2.3) im Leuchtenpaneel (2) ausgeführt sind.

7. Anhänger nach Anspruch 6, **dadurch gekennzeichnet, dass** die lange Bordwand (5.1) aus einer Bordwandwand (5.1.1), einem Bordwandkanal (5.1.2), einem Befestigungsprofil (5.1.3) und zusätzlichen Befestigungsprofilen (5.1.4) besteht, die die lange Bordwand (5.1) mit der Plattform (1) verbinden.

8. Anhänger nach Anspruch 6 oder 7, **dadurch gekennzeichnet, dass** die Bordwand mit einer Platte (5.1.6) aus Stahl, vorzugsweise verzinktem Stahl, Aluminium, vorzugsweise eloxiertem Aluminium, Sperrholz oder einem Laminatverbund, vorzugsweise einem Laminat, verstärkt ist.

9. Anhänger nach Anspruch 6, **dadurch gekennzeichnet, dass** sich innerhalb des geschlossenen Raumes zwischen der Bordwandwand (5.1.1) und der Platte (5.1.6) ein Bordwandkern (5.1.7) aus Kunststoff, vorzugsweise Polypropylen, Papier oder Metall, vorzugsweise Aluminium und/oder ein zellulares Material befindet.

10. Anhänger nach Anspruch 6, **dadurch gekennzeichnet, dass** der Längsträger (1.5) an der Seitenwand der Plattform (1) befestigt ist.

## Revendications

1. Une plateforme de remorque pour le transport terrestre de marchandises, qui forme le plancher de la remorque, la plateforme ayant la forme d'un pavé droit, la plateforme comprenant une couche extérieure supérieure (1.1) et une couche extérieure inférieure (1.3) qui ont l'une et l'autre la forme d'un profil ouvert, dans lequel chaque couche extérieure est composée d'une base pourvue latéralement sur les quatre côtés de rebords entre lesquels un espace ouvert est formé sur l'une de leurs faces, de sorte que les deux couches extérieures se chevauchent l'une l'autre et que le noyau (1.2) de la plateforme (1) est attaché aux couches extérieures adjacentes au noyau (1.2) tandis que le noyau est situé dans l'espace formé entre la couche extérieure supérieure (1.1) et la couche externe inférieure (1.3) qui sont attachées et qui créent un espace fermé par le haut, par le bas et par les côtés, la couche externe supérieure (1.1) et la couche externe inférieure (1.3) étant constituées de métal, d'alliages métalliques ou de matériaux composites, tandis que le noyau (1.2) se présente sous la forme d'un matériau cellulaire, de préférence en nid d'abeille, le noyau (1.2) étant d'une épaisseur minimale de 50 % de l'épaisseur de la plateforme formée par le noyau et les couches extérieures, **caractérisée** en ceci que les angles de la plateforme sont usinés entre les rebords, lesquels sont découpés à travers toute l'épaisseur de la plateforme sur une partie de la longueur des rebords à un angle de 90° par rapport à la base.

2. La plateforme selon la revendication 1, **caractérisée** en ceci que la couche extérieure supérieure (1.1) recouvre avec sa base et ses rebords l'espace formé par la couche extérieure inférieure (1.3).

3. La plateforme selon la revendication 1 ou 2, dans laquelle la couche extérieure supérieure (1.1) et la couche extérieure inférieure (1.3) sont en acier galvanisé, en aluminium anodisé ou en aluminium peint.

4. La plateforme selon la revendication 1, 2 ou 3, **caractérisée** en ceci que le noyau (1.2) de la plateforme (1) est fabriqué en plastique, de préférence en polypropylène, en papier ou en métal, de préférence en aluminium.

5. La plateforme selon la revendication 1, **caractérisée** en ceci que l'épaisseur minimale du noyau (1.2) est de 10 mm, et que l'épaisseur maximale de chacune des couches extérieures est de 9 mm.

6. Une remorque pour le transport terrestre de marchandises qui comprend une base créée par la plateforme décrite dans l'une des revendications 1 à 5 et des ridelles, cette plateforme comprenant les éléments de fixation des ridelles sous la forme de profils de fixation avant (1.7.2) insérés dans la plateforme (1) et de profils de fixation arrière (2.3) insérés dans le panneau de support des feux arrière (2).

7. La remorque selon la revendication 6, **caractérisée** en ceci que la ridelle longue (5.1) est composée d'une paroi de ridelle (5.1.1), d'une gorge de ridelle (5.1.2), d'un profil de fixation (5.1.3) et de profils de fixation des accessoires (5.1.4) reliant la ridelle longue (5.1) à la plateforme (1).

8. La remorque selon la revendication 6 ou 7, **caractérisée** en ceci que la ridelle est renforcée par une plaque (5.1.6) fabriquée en acier, de préférence en acier galvanisé, en aluminium, de préférence en aluminium anodisé, en contreplaqué ou en matériau composite stratifié, de préférence en matériau stratifié.

9. La remorque selon la revendication 6, où le noyau de la ridelle (5.1.7) est situé à l'intérieur de l'espace clos entre la paroi de la ridelle (5.1.1) et la plaque (5.1.6), ce noyau étant fabriqué en plastique, de préférence en polypropylène, en papier ou en métal, de préférence en aluminium et/ou en matériau cellulaire.

10. Remorque selon la revendication 6, **caractérisée** en ceci que l'élément latéral (1.5) est attaché à la paroi latérale de la plateforme (1).
